# FASCICULE DE BREVET EUROPEEN

(11) **EP 3 332 275 B1**
(45) Date de publication et mention de la délivrance du brevet: **25.03.2020**
(21) Numéro de dépôt: 16757710.5
(22) Date de dépôt: 04.08.2016
(51) Int. Cl.: G02B 3/14, A61B 3/036, G02B 3/06

(54) **LENTILLE DE PUISSANCE OPTIQUE VARIABLE, ENSEMBLE OPTIQUE COMPRENANT UNE TELLE LENTILLE ET DISPOSITIF DE COMPENSATION VISUELLE COMPRENANT UN TEL ENSEMBLE OPTIQUE**
LINSE MIT VARIABLER OPTISCHER LEISTUNG, OPTISCHE ANORDNUNG MIT SOLCH EINER LINSE UND SEHKORREKTURVORRICHTUNG MIT SOLCH EINER OPTISCHEN ANORDNUNG
LENS OF VARIABLE OPTICAL POWER, OPTICAL ASSEMBLY COMPRISING SUCH A LENS AND VISION-CORRECTING DEVICE COMPRISING SUCH AN OPTICAL ASSEMBLY

(30) Priorité: 04.08.2015 FR 1557532
(43) Date de publication de la demande: 13.06.2018
(73) Titulaire: Essilor International, 94220 Charenton-le-Pont (FR)
(72) Inventeur: BOUTINON, Stéphane, 94227 Charenton Le Pont Cedex (FR); NAUCHE, Michel, 94227 Charenton Le Pont Cedex (FR)
(74) Mandataire: Jacobacci Coralis Harle
(86) Numéro de dépôt international: PCT/FR2016/052032
(87) Numéro de publication internationale: WO 2017/021663

(56) Documents cités:
- EP-A1- 0 291 596
- WO-A1-2015/107303
- DE-A1- 3 712 145

## Description

### DOMAINE TECHNIQUE AUQUEL SE RAPPORTE L'INVENTION

La présente invention concerne le domaine de l'optique.

Elle concerne plus particulièrement une lentille de puissance optique variable, un ensemble optique comprenant une telle lentille et un dispositif de compensation visuelle comprenant un tel ensemble optique.

### ARRIERE-PLAN TECHNOLOGIQUE

On connaît, par exemple du document EP 2 034 338, une lentille de puissance variable comprenant une chambre délimitée en partie par une membrane élastique et remplie d'un fluide.

On propose dans ce document de faire varier le volume de la chambre (par déplacement d'éléments mécaniques) afin de modifier la pression du fluide et de déformer ainsi la membrane.

Cette solution repose ainsi sur une déformation élastique de la membrane par étirement, qui permet de donner à celle-ci une forme sphérique, et elle est donc bien adaptée lorsque l'on souhaite faire varier la puissance sphérique de la lentille selon un axe optique donné.

L'obtention d'un astigmatisme est en revanche plus complexe dans un tel système puisqu'elle nécessite par exemple l'utilisation d'une membrane réalisée dans un matériau non-homogène et/ou anisotrope.

Le document EP 0 291 596 A1 divulgue une lentille cylindrique de puissance optique variable.

### OBJET DE L'INVENTION

Dans ce contexte, la présente invention propose la lentille de la revendication 1.

Par déplacement dudit élément, on peut ainsi déformer la lame flexible (par flexion unidirectionnelle) de façon à ce qu'elle épouse plus ou moins la forme de l'arête, ce qui permet de modifier les caractéristiques de réfraction de la lentille et d'obtenir la variation de puissance optique cylindrique souhaitée grâce à la forme cylindrique de l'arête.

Selon des caractéristiques optionnelles et donc non limitatives :
- l'élément est une pièce de commande guidée en translation dans le corps et disposée en appui sur ladite première partie de la lame de manière à plaquer ladite seconde partie de la lame sur l'arête ;
- une bague de commande montée en rotation dans le corps coopère avec la pièce de commande au moyen d'un système vis-écrou ;
- la lame est reçue à l'intérieur d'une ouverture centrale du corps et comprend des moyens empêchant sa rotation autour d'un axe traversant l'ouverture centrale (qui correspond par exemple à l'axe optique de la lentille) ;
- l'arête est formée par un bord d'extrémité d'une paroi entourant l'ouverture centrale ;
- le liquide est reçu entre la lame et le corps avec une pression insuffisante pour entraîner (du fait de la seule pression) une déformation (par étirement) de la lame ;
- le liquide est retenu dans une chambre formée par la lame et par une membrane élastique périphérique.

L'invention propose également un ensemble optique comprenant une première lentille telle que mentionnée ci-dessus et une seconde lentille de puissance sphérique variable selon un axe optique.

Selon des caractéristiques optionnelles et donc non limitatives :
- la puissance sphérique est variable par déplacement d'un élément mécanique de la seconde lentille ;
- le corps de la première lentille est monté en rotation autour de l'axe optique ;
- un premier système d'entraînement est conçu pour déplacer l'élément de la première lentille, un second système d'entraînement est conçu pour déplacer l'élément mécanique de la seconde lentille et un troisième système d'entraînement est conçu pour entraîner le corps en rotation autour de l'axe optique ;
- le troisième système d'entraînement est conçu pour déplacer l'ensemble optique solidairement du corps en rotation autour de l'axe optique ;
- le troisième système d'entraînement est conçu pour entraîner le corps indépendamment de l'élément de la première lentille et de l'élément mécanique de la seconde lentille ;
- un moyen de commande du premier système d'entraînement et du second système d'entraînement est conçu pour piloter le premier système d'entraînement de manière à conserver une position relative donnée entre le corps et l'élément de la première lentille, et pour piloter le second système d'entraînement de manière à conserver une position relative donnée entre le corps et l'élément mécanique de la seconde lentille.

L'invention propose enfin un dispositif de compensation visuelle comprenant un ensemble optique tel qu'il vient d'être défini.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un ensemble optique comprenant une lentille conforme à l'invention ;
- la figure 2 représente une vue en coupe de l'ensemble optique de la figure 1 ; et
- la figure 3 représente un écorché en perspective de l'ensemble optique de la figure 1.

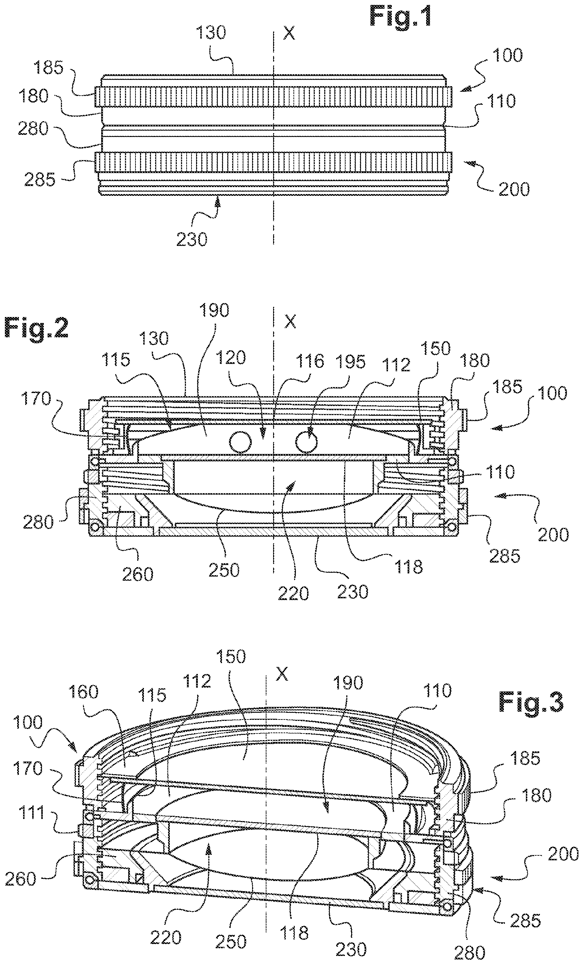

Les figures 1 à 3 représentent un ensemble optique comprenant une première lentille 100 et une seconde lentille 200.

La première lentille 100 et la seconde lentille 200 sont ici réalisées respectivement de part et d'autre d'un même bâti (ou corps) 110. Une plaque de séparation indéformable (transparente) 118, montée sur le bâti commun 110, délimite des chambres remplies de liquide de la première lentille 100 et de la seconde lentille 200, comme expliqué plus loin, et permet ainsi un fonctionnement indépendant des deux lentilles 100, 200.

En variante, l'une ou l'autre des deux lentilles 100, 200 pourrait être réalisée séparément. On décrit d'ailleurs ci-dessous chaque lentille 100, 200 séparément.

Comme expliqué dans la suite, la première lentille 100 est conçue pour générer, selon un axe optique X de la première lentille, une puissance optique cylindrique variable.

La seconde lentille 200 est quant à elle conçue pour générer, selon son axe optique identique à l'axe optique X de la première lentille 100, une puissance optique sphérique variable.

La première lentille 100 comprend le bâti (ou corps) 110 et une lame transparente flexible 150.

Le bâti 110 présente une ouverture centrale 120 fermée à une extrémité par une première lame de fermeture (transparente) 130 et à l'autre extrémité par la plaque de séparation 118 ; la lame transparente flexible 150 est située dans l'ouverture centrale 120, entre la première lame de fermeture 130 et la plaque de séparation 118.

Deux parois intégrées au bâti 110 permettent un guidage de la lame flexible 150 destiné à empêcher toute rotation de la lame flexible 150 autour de l'axe optique X.

Le bâti 110 présente une arête 115 qui s'étend à la périphérie de l'ouverture centrale 120 et qui est inscrite dans une surface cylindrique dont l'axe est perpendiculaire et sécant à l'axe optique X.

Le bâti 110 comprend par exemple à cet effet une paroi 112 qui entoure l'ouverture centrale 120 et dont le bord d'extrémité libre définit l'arête 115 précitée.

L'arête 115 a pour fonction de créer une butée servant de point de départ à la cambrure de la lame flexible 150 (par flexion), comme expliqué plus loin. La forme cylindrique de l'arête 150 (c'est-à-dire la surface cylindrique dans laquelle l'arête 115 est inscrite) a de ce fait un rayon inférieur au rayon correspondant à la puissance cylindrique maximum souhaitée, typiquement de l'ordre de 40 mm ou moins.

La première lentille 100 comprend également une première pièce de commande 160 solidaire de la lame flexible 150.

Plus précisément, la première pièce de commande 160 est solidaire d'une partie périphérique de la lame flexible 150.

La première pièce de commande 160 est ici réalisée sous la forme d'une plaque de commande annulaire entourant l'ouverture centrale 120 et comportant, au niveau de chacune de deux zones opposées à 180°, un filet externe.

La première pièce de commande 160 est montée dans le bâti 110 guidée en translation selon l'axe optique X. Cette première pièce de commande 160 est ainsi montée mobile en translation le long de l'axe optique X, perpendiculairement à l'axe de ladite surface cylindrique.

La première lentille 100 comprend également une première membrane élastique 170 de forme cylindrique et reliant le bâti 110 et la première pièce de commande 160.

La lame flexible 150, la première pièce de commande 160, la première membrane élastique 170, la plaque intermédiaire 118 et le bâti 110 forment une chambre remplie d'un liquide 190. Ici, ce liquide 190 est identique à celui utilisé dans le document US8000022, à savoir de l'huile siliconée (par exemple du type Rhodrosil Huile 47).

Le bâti 110 comporte des ouvertures de passage de fluide 195 dans la paroi 112 susmentionnée afin de faciliter le passage du liquide entre les différentes parties de la chambre.

La première membrane élastique 170 est conçue pour se déformer (par étirement notamment) afin de compenser les variations de volume de la chambre remplie du liquide 190 causées par la flexion de la lame flexible 150, comme décrit ci-après. Comme bien visible sur les figures 2 et 3, la première membrane élastique 170 est située à la périphérie du bâti 110 et ne joue donc aucun rôle optique.

La première lentille cylindrique 100 comprend enfin une première bague de commande 180, mobile uniquement en rotation sur un angle donné autour de l'axe optique X. La première bague de commande 180 comporte un filetage interne (ici de section carré) centré sur l'axe optique X et qui engrène avec le filet externe de la première pièce de commande 160.

La première bague de commande 180 présente également une pluralité de dents 185 sur toute sa périphérie de façon à former une roue dentée et à pouvoir ainsi être entraînée en rotation par un premier système d'entraînement (non représenté), par exemple un moteur dont l'axe de sortie présente une vis sans fin qui coopère avec les dents 185 de la première bague de commande 180.

On peut prévoir par ailleurs de limiter la course de la première bague de commande 180, par exemple au moyen d'une butée franche réalisée entre le bâti 110 et la première bague de commande 180.

On décrit à présent les mouvements qui permettent la flexion de la lame flexible 150 et ainsi l'obtention d'une puissance optique cylindrique variable.

On considère pour l'exposé que la première pièce de commande 160 est dans sa position la plus haute (en considérant l'orientation de la figure 2), c'est-à-dire la plus proche de la première lame de fermeture 130, comme représenté sur les figures 2 et 3. Comme visible sur ces figures, dans cette position de la première pièce de commande 160, la lame flexible 150 n'est pas en contact avec l'arête 115.

Lors de la mise en rotation de la première bague de commande 180 (par exemple au moyen du premier système d'entraînement précité), la première pièce de commande 160 entre en translation (vers le bas sur la figure 2) par l'intermédiaire du système vis/écrou, sur quelques degrés, jusqu'à ce que la lame flexible 150 vienne en contact avec l'arête 115 de forme cylindrique solidaire du bâti 110 (ce contact s'effectuant en premier lieu au sommet 116 de l'arête 115 sur la figure 2, c'est-à-dire dans le plan contenant l'axe optique X et l'axe de la surface cylindrique contenant l'arête 115).

La première pièce de commande 160 déplace en effet ladite partie périphérique de la lame flexible 150 tandis qu'une autre partie de cette lame flexible 150 vient en contact avec l'arête 115.

En continuant la rotation de la première bague de commande 180, l'ensemble formé de la première pièce de commande 160 et de la lame flexible 150 poursuit sa translation (vers le bas en figure 2, c'est-à-dire en s'éloignant de la première lame de fermeture 130) de sorte que la lame flexible 150 entre en flexion progressive, avec une valeur de rayon (de flexion) directement liée à l'angle de rotation de la première bague de commande 180.

Grâce à l'arête de forme cylindrique, la lame flexible 150 va se déformer préférentiellement selon une forme cylindrique, ce qui permet d'obtenir la correction cylindrique recherchée, laquelle a une puissance variable selon la valeur du rayon de flexion précité.

Par ailleurs, du fait que la déformation de la lame flexible est initiée par l'arête 150 inscrite dans une surface cylindrique, l'axe de cette correction cylindrique correspond à l'axe de cette surface cylindrique (soit un axe fixe par rapport au bâti 110 et perpendiculaire à l'axe optique X).

On remarque que la lame flexible 150 subit en général également une seconde déformation plus ou moins importante en fonction notamment de son anisotropie, de sa raideur en flexion et de l'augmentation de pression liée à la déformation de la première membrane élastique 170. De ce fait, la lame flexible 150 n'a en général pas une forme purement cylindrique, mais une forme torique.

La composante sphérique additionnelle pourra alors éventuellement être compensée par d'autres moyens optiques, ici par action sur la seconde lentille 200 décrite plus bas.

Lors de la déformation de la lame flexible 150, le volume au sein de la chambre remplie du liquide 190 demeure constant. En effet, l'augmentation de pression générée par la déformation de la lame flexible 150 entraîne la déformation de la première membrane élastique 170 de manière à absorber le transfert de liquide 190 issu de la zone utile.

On remarque par ailleurs que cette légère mise en pression (réalisée par la lame flexible 150) permet d'assurer une réversibilité du mouvement, tout en assurant un calage du jeu au sein du système vis/écrou.

En résumé, par entraînement de la première bague de commande 180 en rotation au moyen du premier système d'entraînement, on fait varier comme expliqué ci-dessus la puissance cylindrique de la première lentille 100 (l'axe de la correction cylindrique étant en revanche fixe par rapport au bâti 110 comme expliqué plus haut).

La seconde lentille 200 comprend un support présentant une ouverture centrale 220, une seconde membrane élastique 250 reçue dans l'ouverture centrale 220, une seconde pièce de commande 260 solidaire de la seconde membrane élastique 250 et une seconde bague de commande 280.

Le support de la seconde lentille 200 est ici solidaire du bâti 110 de la première lentille 110, par exemple réalisé d'une pièce avec celui-ci.

La seconde pièce de commande 260 est montée guidée en translation dans le support, ici au moyen de trois colonnes de guidage.

La seconde bague de commande 280 est mobile uniquement en rotation autour de l'axe optique X et permet, lors de ses mouvements de rotation, de déplacer la seconde pièce de commande 260 en translation selon l'axe optique X au moyen d'un système vis/écrou (formé par exemple d'un filetage interne de la seconde bague de commande 280 qui coopère avec un filetage externe de la seconde pièce de commande 260).

La seconde membrane élastique 250, la seconde pièce de commande 260, la plaque de séparation 118 et le support (ici le bâti commun 110) forment une chambre remplie de liquide de sorte que le déplacement en translation de la seconde pièce de commande 260 entraîne une déformation élastique (avec étirement) de la seconde membrane élastique 250, laquelle adopte ainsi une forme essentiellement sphérique, avec un rayon de courbure dépendant de la position de la seconde pièce de commande 260.

On obtient ainsi la puissance sphérique variable recherchée.

La seconde bague de commande 280 porte sur toute sa périphérie une pluralité de dents 285 de façon à former une roue dentée et à pouvoir ainsi être entraînée en rotation par un second système d'entraînement (non représenté), par exemple un moteur dont l'axe de sortie présente une vis sans fin qui coopère avec les dents 285 de la seconde bague de commande 280.

Ainsi, par entraînement de la seconde bague de commande 280 en rotation au moyen du second système d'entraînement, on fait varier comme expliqué ci-dessus la puissance sphérique de la seconde lentille 200.

L'ensemble de la cinématique est sans jeu de construction. Grâce à cette caractéristique, il est possible d'établir une loi de commande de la cinématique qui est continue. En effet, dans le cas contraire, puisque le sens des efforts s'exerçant sur la cinématique s'inverse lorsque la membrane passe d'une forme convexe à une forme concave, un jeu de construction risquerait de fausser la loi de commande ou compliquerait l'élaboration de cette loi de commande.

Comme décrit ci-dessus, il est possible de faire varier la puissance cylindrique et la puissance sphérique de la correction obtenue par l'ensemble optique formé de la première lentille 100 et de la seconde lentille 200 en entraînant respectivement en rotation la première bague de commande 180 (par exemple au moyen d'un premier système d'entraînement) et la seconde bague de commande 280 (par exemple au moyen d'un second système d'entraînement).

Afin de faire varier l'axe de cylindre de la correction cylindrique obtenue par la première lentille 100, l'ensemble optique précité peut être monté mobile en rotation autour de l'axe optique X par rapport à un référentiel fixe (notamment par rapport à l'œil du patient devant lequel l'ensemble optique est placé dans le cadre d'un examen de réfraction subjective).

On prévoit alors par exemple un troisième système d'entraînement conçu pour entraîner en rotation le bâti 110 autour de l'axe optique X (par rapport au référentiel fixe précité), par exemple au moyen d'un ensemble de dents 111 prévues sur la paroi externe du bâti 110, sur la périphérie de l'ensemble optique.

Selon ce mode de réalisation, le premier système d'entraînement, le second système d'entraînement et le troisième système d'entraînement sont montés dans le référentiel fixe et la rotation du bâti 110 (provoquée par le troisième système d'entraînement) par rapport au référentiel fixe entraîne un mouvement de rotation du bâti d'une part par rapport à la première bague de commande 180 et d'autre part par rapport à la seconde bague de commande 280 (ces deux bagues de commande 180, 280 étant immobiles dans le référentiel fixe en l'absence d'entraînement par les premier et second systèmes d'entraînement).

On prévoit dans ce cas de commander (simultanément ou non à la rotation du bâti 110) le premier système d'entraînement et le second système d'entraînement de manière à conserver la position relative du bâti 110, de la première bague de commande 180 et de la seconde bague de commande 280 afin de conserver les valeurs de puissance cylindrique et de puissance sphérique souhaitées.

Une telle construction a l'avantage de ne pas avoir à embarquer le premier système d'entraînement et le second système d'entraînement sur un référentiel solidaire du bâti 110 et entraîné par le troisième système d'entraînement. Cette dernière possibilité est toutefois également envisageable, auquel cas le troisième système d'entraînement est conçu pour déplacer l'ensemble optique (notamment la première lentille 100 et la seconde lentille 200) solidairement du corps en rotation autour de l'axe optique.

L'ensemble optique qui vient d'être décrit peut être utilisé dans un dispositif de compensation visuelle utilisable par exemple pour un examen de réfraction subjective.

Un tel dispositif de compensation visuelle comprend l'ensemble optique formé de la première lentille 100 et de la seconde lentille 200, le premier système d'entraînement précité (disposé de manière à entraîner en rotation la première bague de commande 180), le second système d'entraînement précité (disposé de manière à entraîner en rotation la seconde bague de commande 280) et le troisième système d'entraînement précité (conçu pour entraîner en rotation le bâti 110).

L'axe optique X de l'ensemble optique correspond alors à un axe d'observation selon lequel une personne subissant l'examen de réfraction subjective peut observer à travers le dispositif de compensation visuelle.

## Revendications

1. Lentille de puissance optique cylindrique variable (100), **caractérisée en ce qu'**elle comprend :
- une lame transparente flexible (150) ;
- un corps (110) présentant une arête (115) inscrite dans une surface cylindrique ;
- un élément (160) apte à déplacer une première partie de la lame (150), distincte d'une seconde partie de la lame (150), entre une position où la lame (150) n'est pas en contact avec l'arête (115) et une position où la seconde partie de la lame (150) est en contact avec l'arête (115), de manière à déformer la lame (150) par flexion ;
- un liquide (190) contenu entre la lame (150) et le corps (110).

2. Lentille selon la revendication 1, dans laquelle l'axe de ladite surface cylindrique est perpendiculaire à un axe optique (X) de la lentille (100).

3. Lentille selon la revendication 1 ou 2, dans laquelle l'élément est une pièce de commande (160) guidée en translation dans le corps (110) et disposée en appui sur ladite première partie de la lame (150) de manière à plaquer ladite seconde partie de la lame (150) sur l'arête (115).

4. Lentille selon la revendication 3, dans laquelle une bague de commande (180) montée en rotation dans le corps (110) coopère avec la pièce de commande (160) au moyen d'un système vis-écrou.

5. Lentille selon l'une des revendications 1 à 4, dans laquelle la lame (150) est reçue à l'intérieur d'une ouverture centrale (120) du corps (110) et comprend des moyens empêchant sa rotation autour d'un axe (X) traversant l'ouverture centrale (120).

6. Lentille selon la revendication 5, dans laquelle l'arête (115) est formée par un bord d'extrémité d'une paroi (112) entourant l'ouverture centrale (120).

7. Lentille selon l'une des revendications 1 à 6, dans laquelle le liquide (190) est reçu entre la lame (150) et le corps (110) avec une pression insuffisante pour entraîner une déformation de la lame (150).

8. Lentille selon l'une des revendications 1 à 7, dans laquelle le liquide (190) est retenu dans une chambre formée par la lame (150) et par une membrane élastique (170).

9. Ensemble optique comprenant une première lentille (100) conforme à l'une des revendications 1 à 8 et une seconde lentille (200) de puissance sphérique variable selon un axe optique (X).

10. Ensemble optique selon la revendication 9, dans lequel ladite puissance sphérique est variable par déplacement d'un élément mécanique (280) de la seconde lentille (200).

11. Ensemble optique selon la revendication 9 ou 10, dans lequel le corps (110) de la première lentille (100) est monté en rotation autour de l'axe optique (X).

12. Ensemble optique selon la revendication 11 prise dans la dépendance de la revendication 10, dans lequel un premier système d'entraînement est conçu pour déplacer l'élément (160) de la première lentille (100), dans lequel un second système d'entraînement est conçu pour déplacer l'élément mécanique (280) de la seconde lentille (200) et dans lequel un troisième système d'entraînement est conçu pour entraîner le corps (110) en rotation autour de l'axe optique (X).

13. Ensemble optique selon la revendication 12, dans lequel le troisième système d'entraînement est conçu pour déplacer l'ensemble optique solidairement du corps (110) en rotation autour de l'axe optique (X).

14. Ensemble optique selon la revendication 12, dans lequel le troisième système d'entraînement est conçu pour entraîner le corps (110) indépendamment de l'élément (160) de la première lentille (100) et de l'élément mécanique (280) de la seconde lentille (200) et dans lequel un moyen de commande du premier système d'entraînement et du second système d'entraînement est conçu pour piloter le premier système d'entraînement de manière à conserver une position relative donnée entre le corps (110) et l'élément (160) de la première lentille (100), et pour piloter le second système d'entraînement de manière à conserver une position relative donnée entre le corps (110) et l'élément mécanique (280) de la seconde lentille (200).

15. Dispositif de compensation visuelle comprenant un ensemble optique selon l'une des revendications 12 à 14.

## Patentansprüche

1. Linse mit variabler optischer Zylinderwirkung (100), **dadurch gekennzeichnet, dass** sie umfasst:
- eine flexible durchsichtige Platte (150);
- einen Körper (110), der eine Kante (115) aufweist, die in eine zylindrische Fläche einbeschrieben ist;
- ein Element (160), das dafür ausgelegt ist, einen ersten Teil der Platte (150), der von einem zweiten Teil der Platte (150) verschieden ist, zwischen einer Position, in der sich die Platte (150) nicht in Kontakt mit der Kante (115) befindet, und einer Position, in der sich der zweite Teil der Platte (150) in Kontakt mit der Kante (115) befindet, zu verlagern, so dass die Platte (150) durch Biegen verformt wird;
- eine Flüssigkeit (190), die zwischen der Platte (150) und dem Körper (110) enthalten ist.

2. Linse nach Anspruch 1, wobei die Achse der zylindrischen Fläche senkrecht zu einer optischen Achse (X) der Linse (100) ist.

3. Linse nach Anspruch 1 oder 2, wobei das Element ein Steuerteil (160) ist, das im Körper (110) translatorisch geführt ist und am ersten Teil der Platte (150) anliegend angeordnet ist, so dass der zweite Teil der Platte (150) auf die Kante (115) gepresst wird.

4. Linse nach Anspruch 3, wobei eine Steuerhülse (180), die im Körper (110) drehbar gelagert ist, mit dem Steuerteil (160) mittels eines Schraube-Mutter-Systems zusammenwirkt.

5. Linse nach einem der Ansprüche 1 bis 4, wobei die Platte (150) im Inneren einer zentralen Öffnung (120) des Körpers (110) aufgenommen ist und Mittel umfasst, die ihre Rotation um eine Achse (X), welche die zentrale Öffnung (120) durchquert, verhindern.

6. Linse nach Anspruch 5, wobei die Kante (115) von einem Endrand einer Wand (112) gebildet wird, welche die zentrale Öffnung (120) umgibt.

7. Linse nach einem der Ansprüche 1 bis 6, wobei die Flüssigkeit (190) zwischen der Platte (150) und dem Körper (110) mit einem Druck aufgenommen ist, der nicht ausreichend ist, um eine Verformung der Platte (150) zur Folge zu haben.

8. Linse nach einem der Ansprüche 1 bis 7, wobei die Flüssigkeit (190) in einer Kammer gehalten wird, die von der Platte (150) und von einer elastischen Membran (170) gebildet wird.

9. Optische Anordnung, welche eine erste Linse (100) gemäß einem der Ansprüche 1 bis 8 und eine zweite Linse (200) mit variabler sphärischer Wirkung entlang einer optischen Achse (X) umfasst.

10. Optische Anordnung nach Anspruch 9, wobei die sphärische Wirkung durch Verlagerung eines mechanischen Elements (280) der zweiten Linse (200) variabel ist.

11. Optische Anordnung nach Anspruch 9 oder 10, wobei der Körper (110) der ersten Linse (100) um die optische Achse (X) drehbar gelagert ist.

12. Optische Anordnung nach Anspruch 11 in Abhängigkeit von Anspruch 10, wobei ein erstes Antriebssystem dafür ausgebildet ist, das Element (160) der ersten Linse (100) zu verlagern, wobei ein zweites Antriebssystem dafür ausgebildet ist, das mechanische Element (280) der zweiten Linse (200) zu verlagern, und wobei ein drittes Antriebssystem dafür ausgebildet ist, den Körper (110) um die optische Achse (X) drehend anzutreiben.

13. Optische Anordnung nach Anspruch 12, wobei das dritte Antriebssystem dafür ausgebildet ist, die optische Anordnung in fester Verbindung mit dem Körper (110) um die optische Achse (X) drehend zu verlagern.

14. Optische Anordnung nach Anspruch 12, wobei das dritte Antriebssystem dafür ausgebildet ist, den Körper (110) unabhängig vom Element (160) der ersten Linse (100) und vom mechanischen Element (280) der zweiten Linse (200) anzutreiben, und wobei ein Mittel zur Steuerung des ersten Antriebssystems und des zweiten Antriebssystems dafür ausgebildet ist, das erste Antriebssystem so zu steuern, dass eine gegebene relative Position zwischen dem Körper (110) und dem Element (160) der ersten Linse (100) beibehalten wird, und das zweite Antriebssystem so zu steuern, dass eine gegebene relative Position zwischen dem Körper (110) und dem mechanischen Element (280) der zweiten Linse (200) beibehalten wird.

15. Vorrichtung zur Sehkorrektur, welche eine optische Anordnung nach einem der Ansprüche 12 bis 14 umfasst.

## Claims

1. Lens (100) of variable cylindrical optical power, **characterized in that** it comprises:
- a flexible transparent plate (150);
- a body (110) having a ridge (115) inscribed in a cylindrical surface;
- an element (160) able to move a first portion of the plate (150), distinct from a second portion of the plate (150), between a position where the plate (150) does not contact the ridge (115) and a position where the second portion of the plate (150) makes contact with the ridge (115), so as to deform the plate (150) by bending;
- a liquid (190) contained between the plate (150) and the body (110).

2. Lens according to claim 1, wherein the axis of said cylindrical surface is perpendicular to an optical axis (X) of the lens (100).

3. Lens according to claim 1 or 2, wherein the element is a control part (160) that is guided translationally in the body (110) and arranged to bear against said first portion of the plate (150) so as to press said second portion of the plate (150) against the ridge (115).

4. Lens according to claim 3, wherein a control ring (180) rotatably mounted in the body (110) interacts with the control part (160) by means of a bolt/nut system.

5. Lens according to one of claims 1 to 4, wherein the plate (150) is received in the interior of a central opening (120) of the body (110) and comprises means preventing its rotation about an axis (X) passing through the central opening (120).

6. Lens according to claim 5, wherein the ridge (115) is formed by an end edge of a wall (112) encircling the central opening (120).

7. Lens according to one of claims 1 to 6, wherein the liquid (190) is received between the plate (150) and the body (110) with an insufficient pressure to cause a deformation of the plate (150).

8. Lens according to one of claims 1 to 7, wherein the liquid (190) is held in a chamber formed by the plate (150) and by an elastic membrane (170).

9. Optical assembly comprising a first lens (100) in accordance with one of claims 1 to 8 and a second lens (200) the spherical power along an optical axis (X) of which is variable.

10. Optical assembly according to claim 9, wherein said spherical power is variable by moving a mechanical element (280) of the second lens (200).

11. Optical assembly according to claim 9 or 10, wherein the body (110) of the first lens (100) is mounted so as to be rotatable about the optical axis (X).

12. Optical assembly according to claim 11 when dependent on claim 10, wherein a first driving system is designed to move the element (160) of the first lens (100), wherein a second driving system is designed to move the mechanical element (280) of the second lens (200) and wherein a third driving system is designed to drive the body (110) to rotate about the optical axis (X).

13. Optical assembly according to claim 12, wherein the third driving system is designed to move the optical assembly jointly with the body (110) in rotation about the optical axis (X).

14. Optical according to claim 12, wherein the third driving system is designed to drive the body (110) independently of the element (160) of the first lens (100) and of the mechanical element (280) of the second lens (200) and wherein a means for controlling the first driving system and the second driving system is designed to pilot the first driving system so as to preserve a given relative position between the body (110) and the element (160) of the first lens (100), and to pilot the second driving system so as to preserve a given relative position between the body (110) and the mechanical element (280) of the second lens (200).

15. Vision-correcting device comprising an optical assembly according to one of claims 12 to 14.
